(19) Europäisches Patentamt / European Patent Office / Office européen des brevets

(11) EP 3 771 114 A1

(12) **EUROPEAN PATENT APPLICATION**
published in accordance with Art. 153(4) EPC

(43) Date of publication:
27.01.2021 Bulletin 2021/04

(51) Int Cl.:
H04B 7/06 (2006.01)  H04W 4/06 (2009.01)
H04W 16/28 (2009.01)

(21) Application number: 19770927.2

(22) Date of filing: 22.03.2019

(86) International application number:
PCT/JP2019/012212

(87) International publication number:
WO 2019/182141 (26.09.2019 Gazette 2019/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 23.03.2018 JP 2018056849

(71) Applicant: NTT DoCoMo, Inc.
Tokyo 100-6150 (JP)

(72) Inventors:
• OKUYAMA, Tatsuki
  Tokyo 100-6150 (JP)
• SUYAMA, Satoshi
  Tokyo 100-6150 (JP)
• MASHINO, Jun
  Tokyo 100-6150 (JP)
• OKUMURA, Yukihiko
  Tokyo 100-6150 (JP)

(74) Representative: Hoffmann Eitle
Patent- und Rechtsanwälte PartmbB
Arabellastraße 30
81925 München (DE)

(54) **BASE STATION AND TRANSMISSION METHOD USING BASE STATION**

(57) When base station 100 detects reception of a plurality of transmission requests for data signals identical in content from a plurality of user terminals 200, base station 100 applies, to the data signals to be transmitted to a plurality of user terminals 200, beamforming for covering a plurality of user terminals 200 by at least one transmission beam, and transmits, by the at least one transmission beam, the data signals to which the beamforming has been applied.

FIG. 1

EP 3 771 114 A1

**Description**

Technical Field

The present disclosure relates to a base station and a transmission method by the base station.

Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of future systems of LTE include the systems called LTE-Advanced (LTE-A), Future Radio Access (FRA), 5th generation mobile communication system (5G), 5G plus 5G+), New Radio Access Technology (New-RAT), and the like (Non-Patent Literature (hereinafter referred to as "NPL") 1).

In a future radio communication system (for example, 5G), the use of Massive Multiple Input Multiple Output (MIMO) using a large number of antenna elements (for example, 100 elements or more) in a high frequency band (for example, 4 GHz or higher) has been studied to further increase the speed and reduce the interference in signal transmission. Massive MIMO allows higher-speed radio communication by the effect of multiplexing and/or the like. Massive MIMO also allows advanced beamforming by controlling a large number of antenna elements, resulting in reduction in interference and also resulting in effects such as effective use of radio resources and/or the like.

Citation List

Non-Patent Literature

NPL 1 3GPP TS 36.300 V8.12.0 "Evolved Universal Terrestrial Radio Access (E-UTRA) and Evolved Universal Terrestrial Radio Access Network(E-UTRAN); Overall description; Stage 2 (Release 8)", April, 2010

Summary of Invention

Technical Problem

However, in a case where identical data signals are transmitted to a plurality of user terminals in an environment like Massive MIMO in which advanced beamforming is available, transmitting the identical data signals individually to a plurality of user terminals causes a decrease in data transmission efficiency.

One object of one aspect of the present disclosure is therefore to provide a base station which improves the data transmission efficiency in the case where identical data signals are transmitted to a plurality of user terminals, and a transmission method by the base station in which the data transmission efficiency is improved.

Solution to Problem

Abase station according to one aspect of the present disclosure includes: a reception section that receives a transmission request for a data signal; a transmission section that transmits the data signal in response to reception of the transmission request using beamforming; and a control section that, when detecting a plurality of the transmission requests for a plurality of the data signals identical in content from a plurality of user terminals, applies beamforming to the data signals to be transmitted to the plurality of user terminals, the beamforming being for covering the plurality of user terminals by at least one transmission beam.

Advantageous Effects of Invention

According to the present disclosure, the data transmission efficiency in the case where identical data signals are transmitted to a plurality of user terminals can be improved.

Brief Description of Drawings

FIG. 1 illustrates an example of a configuration of a radio communication system according to an embodiment of the present disclosure;

FIG. 2 is a block diagram illustrating an example of a configuration of a base station according to an embodiment of the present disclosure;

FIG. 3 is a block diagram illustrating an example of a configuration of a user terminal according to an embodiment of the present disclosure;

FIG. 4 is an explanatory view for explaining a beam transmission method for individual data signals according to an embodiment of the present disclosure;

FIG. 5A is an explanatory view for explaining beam transmission method 1 for identical data signals according to an embodiment of the present disclosure;

FIG. 5B is another explanatory view for explaining beam transmission method 1 for the identical data signals according to an embodiment of the present disclosure;

FIG. 6 is an explanatory view for explaining beam transmission method 2 for identical data signals according to an embodiment of the present disclosure;

FIG. 7 is an explanatory view for explaining beam transmission method 3 for identical data signals according to an embodiment of the present disclosure;

FIG. 8 is a flowchart illustrating an example of processing of beam transmission method 3 for identical data signals according to an embodiment of the present disclosure; and

FIG. 9 illustrates an example of hardware configuration of the base station and the user terminal according to the present disclosure.

Description of Embodiments

Hereinafter, an embodiment of the present disclosure will be described with reference to the accompanying drawings.

Note that, the reference signs such as those in "user terminal 200a" and "user terminal 200b" may be used to describe elements of the same kind while distinguishing them from each other, and common numbers of the reference signs such as that in "user terminal(s) 200" may be used to describe the elements of the same kind without distinguishing them from each other.

<Configuration of Radio Communication System>

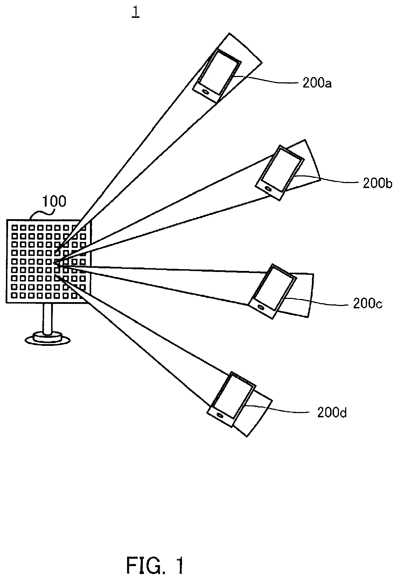

FIG. 1 illustrates an example of a configuration of radio communication system 1 according to the present embodiment.

Radio communication system 1 illustrated in FIG. 1 includes base station (also referred to as "radio base station" or "gNB") 100, and user terminals (also referred to as "radio terminals" or "User Equipments (UEs)") 200a, 200b, 200c, and 200d. Note that, the number of user terminals 200 illustrated in FIG. 1 is an example, and the number of user terminals 200 included in radio communication system 1 may be any number as long as it is equal to or greater than 2.

Base station 100 includes a large number of antenna elements as in Massive MIMO, for example. With this configuration, base station 100 can perform advanced beamforming, so as to utilize radio resources effectively. Base station 100 also can secure broadband radio resources by utilizing a high-frequency band (e.g., several GHz to tens of GHz) for a radio signal. Additionally, since the size of each of the antenna elements is inversely proportional to the wavelength of the radio signal, the higher the utilized frequency band is, the smaller the size of an antenna including the same number of antenna elements can be made. In other words, a larger number of antenna elements can be housed in the antenna of the same size in the case of utilizing the high-frequency band. Note that, although the high-frequency band suffers from a comparatively larger propagation loss and, therefore, the received signal strength at user terminal 200 may decrease, it is possible to compensate for such a decrease by performing advanced beamforming.

Meanwhile, a traditional base station transmits identical data signals individually to user terminals in a case of transmitting the identical data signals, such as in a case of live distribution of a concert or a sport. Therefore, the radio resources are occupied between the base station and each of the user terminals individually, so that the data transmission efficiency decreases.

To prevent this, base station 100 transmits the identical data signals by broadcast beams in the case of transmitting the identical data signals to a plurality of user terminals 200 in the present embodiment as illustrated in FIG. 1. This improves the data transmission efficiency in the case of transmitting the identical data signals. Detailed descriptions will be given below.

<Configuration of Base Station>

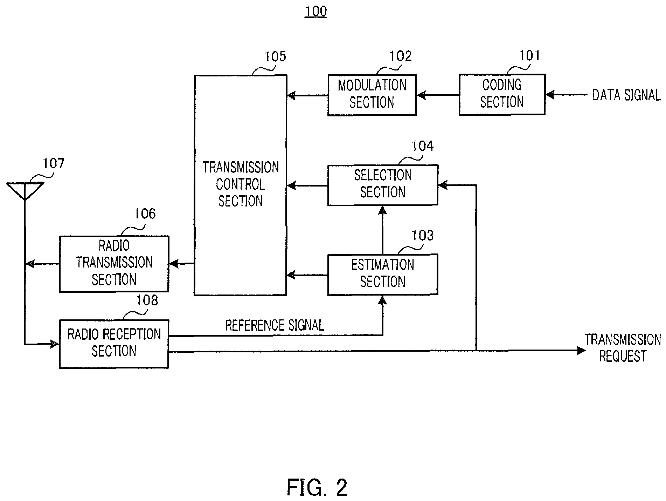

FIG. 2 is a block diagram illustrating an exemplary configuration of base station 100 according to the present embodiment.

Base station 100 includes coding section 101, modulation section 102, estimation section 103, selection section 104, transmission control section 105, radio transmission section 106, antenna 107, and radio reception section 108. Note that illustration of component sections of base station 100 for generating an Orthogonal Frequency Division Multiplexing (OFDM) signal (e.g., an Inverse Fast Fourier Transform (IFFT) processing section and a Cyclic Prefix (CP) addition section) required, for example, in a case where OFDM transmission is performed and/or the like is omitted in FIG. 2.

Coding section 101 encodes a data signal input to coding section 101, and outputs the encoded data signal to modulation section 102.

Modulation section 102 modulates the data signal input from coding section 101, and outputs the modulated data signal to transmission control section 105.

Reference signals transmitted from user terminals 200 and received by antenna 107 (antenna elements) of base station 100 are input to estimation section 103. Estimation section 103 then estimates channels between user terminals 200 and base station 100 using the reference signals (uplink signals), and outputs an estimation result to selection section 104.

Note that, Time Division Duplex (TDD) transmission system is used in radio communication system 1 in the present embodiment. In this case, estimation section 103 estimates the channels of downlink signals from base station 100 to user terminals 200 using the reference signals transmitted from user terminals 200 based on the channel reciprocity.

Estimation section 103 may also estimate the positions of user terminals 200 based on the reference signals. The positions of user terminals 200 may be used for determining the orientations of directivity of the transmission beams from base station 100 to user terminals 200, the shapes of the transmission beams, and/or the like.

Selection section 104 (e.g., scheduler) selects channels for use in signal transmission based on the estimation result input from estimation section 103. Selection section 104 outputs selection information indicating the selected channels to transmission control section 105. Selection section 104 also selects, based on transmission requests received from user terminals 200 for the data signals, those user terminals 200 which are to be a target for data-signal transmission. Selection section 104 may select two or more user terminals 200 as targets for transmission of data signals identical in content (hereinafter, also referred to as "identical-content data signals") from among a plurality of user terminals 200 when detecting reception of a plurality of transmission requests for the identical-content data signals from a plurality of user terminals 200.

Transmission control section 105 performs transmission control for transmitting the data signal input from modulation section 102. This data signal is a data signal addressed to user terminals 200 selected by selection section 104, for example. Transmission control section 105 then performs beamforming or precoding on the data signal using a plurality of antenna elements, for example. In this case, transmission control section 105 may generate a beamforming weight or a precoding matrix using the estimation result input from estimation section 103. Alternatively, transmission control section 105 may perform transmission power control on the data signal for user terminals 200 using the estimation result.

Antenna 107 includes one or more antenna elements.

Radio transmission section 106 performs radio transmission processing such as D/A conversion, frequency conversion, amplification, and/or the like on the data signal (baseband signal) input from transmission control section 105, so as to generate a radio signal. Radio transmission section 106 transmits the generated radio signal via the antenna elements (antenna 107) indicated in the transmission control information input from transmission control section 105.

Radio reception section 108 performs radio reception processing such as A/D conversion, frequency conversion, and/or the like on radio signals received from user terminals 200 via antenna 107 (antenna elements). Radio reception section 108 outputs the reference signals included in reception signals subjected to the radio reception processing to estimation section 103.

<Configuration of User Terminal>

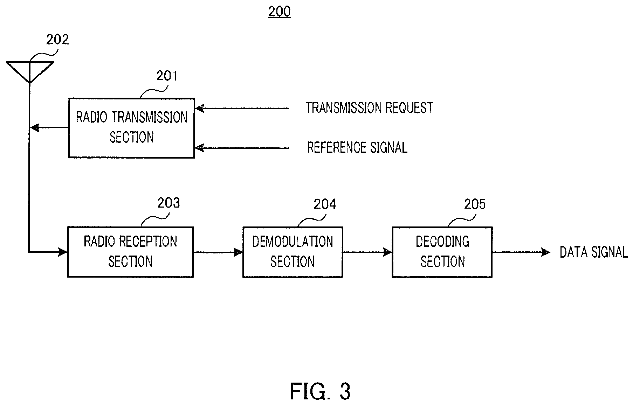

FIG. 3 is a block diagram illustrating an example of a configuration of user terminal 200 according to the present embodiment.

User terminal 200 includes radio transmission section 201, antenna 202, radio reception section 203, demodulation section 204, and decoding section 205. Note that, illustration of component sections of user terminal 200 for receiving the OFDM signal (e.g., CP removal section and FFT processing section) and/or the like is omitted in FIG. 3.

Radio transmission section 201 performs radio transmission processing such as D/A conversion, frequency conversion, amplification, and/or the like on a reference signal and data signal input to radio transmission section 201, so as to generate a radio signal, and radio transmission section 201 transmits the generated radio signal via antenna 202. Note that, the data signal may include a transmission request.

Antenna 202 includes one or more antenna elements.

Radio reception section 203 performs radio reception processing such as A/D conversion, frequency conversion, and/or the like on a radio signal received from base station 100 via antenna 202, and outputs the reception signal subjected to the radio reception processing to demodulation section 204.

Demodulation section 204 demodulates the reception signal input from radio reception section 203, and outputs the demodulated signal to decoding section 205.

Decoding section 205 decodes the signal input from demodulation section 204, and outputs the data signal. With this configuration, user terminal 200 can receive the data signal corresponding to the transmission request transmitted to base station 100.

<Method for Transmitting Individual Beams>

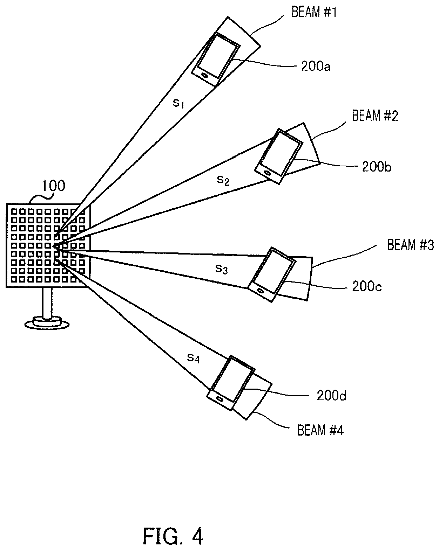

A description will be given with reference to FIG. 4 of a method for transmitting data signals different from one another to user terminals 200 before describing a method for transmitting identical data signals by broadcast to user terminals 200.

FIG. 4 illustrates an example in which base station 100 transmits data signals $s_1$, $s_2$, $s_3$, and $s_4$ to user terminals 200a, 200b, 200c, and 200d, respectively. In this case, transmission control section 105 performs the following processing. That is, transmission control section 105 transmits data signal $s_1$ by beam #1 whose directivity is directed to user terminal 200a. Transmission control section 105 transmits data signal $s_2$ by beam #2 whose directivity is directed to user terminal 200b. Transmission control section 105 transmits data signal $s_3$ by beam #3 whose directivity is directed to user terminal 200c. Transmission control section 105 transmits data signal $s_4$ by beam #4 whose directivity is directed to user terminal 200d.

Transmission control section 105 forms beams #1 to #4 illustrated in FIG. 4 based on following Expression 1, for example.

$$\begin{bmatrix} h_{11} & h_{12} & h_{13} & h_{14} \\ h_{21} & h_{22} & h_{23} & h_{24} \\ h_{31} & h_{32} & h_{33} & h_{34} \\ h_{41} & h_{42} & h_{43} & h_{44} \end{bmatrix} \mathbf{P} \begin{bmatrix} s_1 \\ s_2 \\ s_3 \\ s_4 \end{bmatrix} \quad \dots \quad \text{(Expression 1)}$$

When four beams #1, #2, #3, and #4 are formed with respect to four user terminals 200a, 200b, 200c, and 200d as illustrated in FIG. 4, equivalent channel matrix hij including beamforming of Expression 1 is a 4×4 matrix. That is, "i" and "j" denote an integer of 1 to 4. Transmission control section 105 may generate matrix hij of Expression 1 using the estimation results on the channels and positions related to user terminals 200a to 200d. Precoding matrix P of Expression 1 may be a 4×4 matrix for mutually orthogonalizing beams #1 to #4.

User terminal 200a may extract data signal $s_1$ from received beam #1. User terminal 200b may extract data signal $s_2$ from received beam #2. User terminal 200c may extract data signal $s_3$ from received beam #3. User terminal 200d may extract data signal $s_4$ from received beam #4.

<Beam Transmission Method 1 for Identical Data Signals>

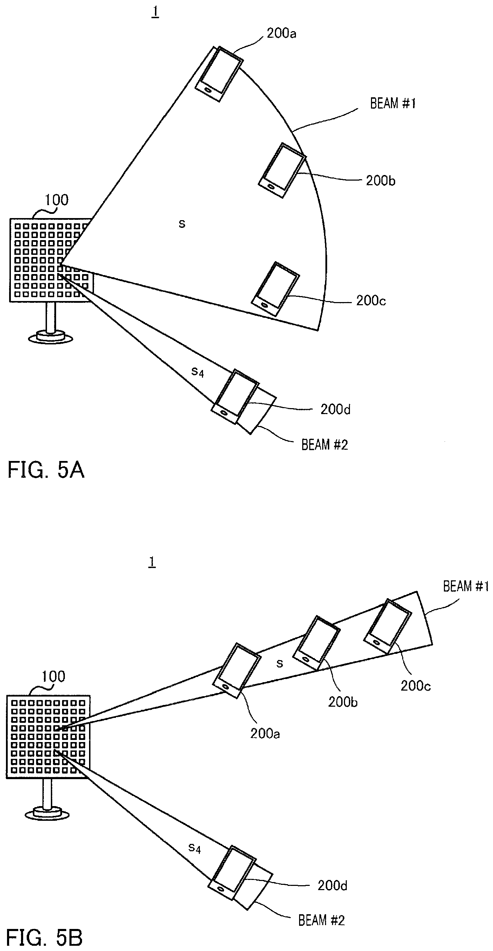

Next, beam transmission method 1 for identical data signals according to the present embodiment will be described with reference to FIG. 5A. Beam transmission method 1 for the identical data signals will be described in relation to a method for transmitting identical-content data signals by a single beam to a plurality of user terminals 200 whose transmission requests are the same (i.e., user terminals 200 requesting transmission of the identical-content data).

Transmission control section 105 of base station 100 performs the following processing when transmitting identical data signals s to a plurality of user terminals 200a, 200b, and 200c whose transmission requests are the same, while transmitting data signal $s_4$ to user terminal 200d whose transmission request is different. That is, transmission control section 105 transmits data signals s by beam #1 whose directivity is directed to cover a plurality of user terminals 200a, 200b, and 200c whose transmission requests are the same as illustrated in FIG. 5A. Transmission control section 105 transmits data signal $s_4$ by beam #2 whose directivity is directed to user terminal 200d. In other words, transmission control section 105 transmits data signals s by single broadcast beam #1 to a plurality of user terminals 200a, 200b, and 200c whose transmission requests are the same.

Transmission control section 105 forms beams #1 and #2 illustrated in FIG. 5A based on following Expression 2, for example.

$$\begin{bmatrix} h_{11} & h_{12} \\ h_{21} & h_{22} \\ h_{31} & h_{32} \\ h_{41} & h_{42} \end{bmatrix} \mathbf{P} \begin{bmatrix} s \\ s_4 \end{bmatrix} \quad \dots \quad \text{(Expression 2)}$$

When beam #1 whose directivity is directed to cover user terminals 200a, 200b, and 200c whose transmission requests are the same and beam #2 whose directivity is directed to user terminal 200d are formed (when beamforming is applied) as illustrated in FIG. 5A, equivalent channel matrix hij including beamforming as illustrated in Expression 2 is a 4×2 matrix. That is, "i" and "j" denote an integer of 1 or 2. Transmission control section 105 may generate matrix hij of Expression 2 using the estimation results on the channels and positions related to user terminals 200a to 200d. Precoding matrix P of Expression 2 may be a 4×2 matrix for mutually orthogonalizing beams #1 and #2.

User terminals 200a, 200b, and 200c may extract data signal s from received beam #1. User terminal 200d may extract data signal $s_4$ from received beam #2.

As understood, base station 100 (transmission control section 105) applies beamforming to cover together a plurality of user terminals 200 whose transmission requests are the same by a single transmission beam in beam transmission method 1 for the identical data signals

Note that, as for the shape of the single broadcast beam to a plurality of user terminals 200, the beam width does not necessarily become gradually broader as illustrated in FIG. 5A. For example, transmission control section 105 makes narrower the shape of the single broadcast beam such that the single broadcast beam can reach farther when a plurality of user terminals 200 are located in a line along the direction away from base station 100 as illustrated in FIG. 5B.

Next, a description will be given of the effect of beam transmission method 1 for the identical data signals.

The base station would perform the following processing if data signals s are transmitted by the method illustrated in FIG. 4 to a plurality of user terminals 200a, 200b, and 200c whose transmission requests are the same. That is, the base station transmits data signals s by beams #1, #2, and #3 respectively to a plurality of user terminals 200a, 200b, and 200c whose transmission requests are the same.

In contrast to this, according to beam transmission method 1 for the identical data signals, data signals s are transmitted by a single beam #1 to a plurality of user terminals 200a, 200b, and 200c whose transmission requests are the same as illustrated in FIGS. 5A and 5B. Therefore, the ratio of occupied radio resources decreases according to beam transmission method 1 for the identical data signals, so that the data transmission efficiency in the case of transmitting the identical data signals to a plurality of user terminals 200 improves.

In addition, although four beams #1, #2, #3, and #4 need to be orthogonalized when the method illustrated in FIG. 4 is applied, only two beams #1 and #2 need to be orthogonalized according to beam transmission method 1 for the identical data signals. Therefore, it is possible according to beam transmission method 1 for the identical data signals to reduce the number of antenna elements (beams) to be orthogonalized, so that base station 100 can transmit the identical data signals to a plurality of user terminals 200 with less energy.

<Beam Transmission Method 2 for Identical Data Signals>

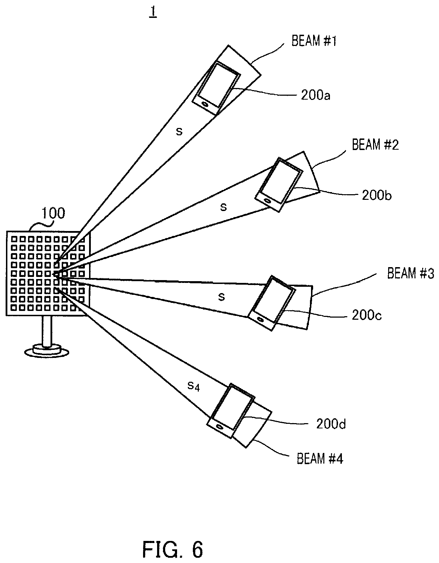

Next, beam transmission method 2 for identical data signals according to the present embodiment will be described with reference to FIG. 6. Beam transmission method 2 for the identical data signals will be described in relation to a method in which base station 100 transmits beams of identical-content data signals respectively to a plurality of user terminals 200 whose transmission requests are the same.

Transmission control section 105 of base station 100 performs the following processing when transmitting identical transmission signals s to user terminals 200a, 200b, and 200c whose transmission requests are the same, while transmitting data signal $s_4$ to user terminal 200d whose transmission request is different. That is, transmission control section 105 transmits data signal s by beam #1 whose directivity is directed to user terminal 200a as illustrated in FIG. 6. Transmission control section 105 transmits data signal s by beam #2 whose directivity is directed to user terminal 200b. Transmission control section 105 transmits data signal s by beam #3 whose directivity is directed to user terminal 200c. Transmission control section 105 transmits data signal $s_4$ by beam #4 whose directivity is directed to user terminal 200d. In other words, transmission control section 105 transmits data signals s by individual beams #1, #2, and #3 respectively to a plurality of user terminals 200a, 200b, and 200c whose transmission requests are the same.

Transmission control section 105 forms identical beams #1, #2, #3, and #4 illustrated in FIG. 6 based on following Expression 3, for example.

$$\begin{bmatrix} h_{11} & h_{12} & h_{13} & h_{14} \\ h_{21} & h_{22} & h_{23} & h_{24} \\ h_{31} & h_{32} & h_{33} & h_{34} \\ h_{41} & h_{42} & h_{43} & h_{44} \end{bmatrix} \mathbf{P} \begin{bmatrix} s \\ s_4 \end{bmatrix} \quad \dots \quad \text{(Expression 3)}$$

When four beams #1, #2, #3, and #4 are respectively formed with respect to four user terminals 200a, 200b, 200c, and 200d as illustrated in FIG. 6 (when beamforming is applied), equivalent channel matrix hij including beamforming of Expression 3 is a 4×4 matrix. That is, "i" and "j" denote an integer of 1 to 4. Transmission control section 105 may generate matrix hij of Expression 3 using the estimation results on the channels and positions related to user terminals 200a to 200d. Precoding matrix P of Expression 3 may be a 4×4 matrix for mutually orthogonalizing data signals s and transmission signal $s_4$.

User terminals 200a, 200b, and 200c may extract data signals s from received beams #1, #2, and #3, respectively. User terminal 200d may extract data signal $s_4$ from received beam #4.

As understood, base station 100 (transmission control section 105) applies beamforming for covering individually a plurality of user terminals 200 whose transmission requests are the same by a plurality of beams in beam transmission method 2 for the identical data signals

Next, a description will be given of the effect of beam transmission method 2 for the identical data signals.

The base station would perform the following processing if data signals s are transmitted by the method illustrated in FIG. 4 respectively to a plurality of user terminals 200a, 200b, and 200c whose transmission requests are the same while data signal $s_4$ is transmitted to user terminal 200d whose transmission request is different. That is, the base station orthogonalizes four data signals of data signal s transmitted to user terminal 200a, data signal s transmitted to user terminal 200b, data signal s transmitted to user terminal 200c, and data signal $s_4$ transmitted to user terminal 200d.

In contrast to this, two data signals of data signal s and data signal $s_4$ are orthogonalized as described above according to beam transmission method 2 for the identical data signals. Therefore, user terminals 200 whose transmission request are the same can receive data signals s by a plurality of different beams, so that a diversity gain can be obtained according to beam transmission method 2 for the identical data signals.

Note that, although base station 100 transmits data signal $s_4$ by single beam #4 to user terminal 200d whose transmission request is different, base station 100 may also transmit data signal $s_4$ by a plurality of beams to user terminal 200d.

<Beam Transmission Method 3 for Identical Data Signals>

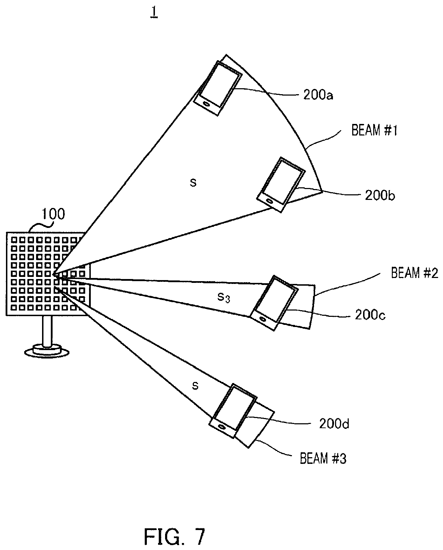

Next, beam transmission method 3 for identical data signals according to the present embodiment will be described with reference to FIG. 7. Beam transmission method 3 for the identical data signals will be described in relation to a method in which base station 100 applies beam transmission methods 1 and 2 for the identical data signals described above based on the positional information on user terminals 200.

Transmission control section 105 of base station 100 performs the following processing when transmitting identical data signals s to a plurality of user terminals 200a, 200b, and 200d whose transmission requests are the same, while transmitting data signal s4 to user terminal 200c whose transmission request is different. That is, transmission control section 105 transmits data signals s to user terminals 200a and 200b by beam #1 whose directivity is directed to cover a plurality of user terminals 200a and 200b as illustrated in FIG. 7; user terminals 200a and 200b are, of a plurality of user terminals 200a, 200b, and 200d whose transmission requests are the same, those which exist at positions covered by a single beam. Transmission control section 105 transmits, by beam #3 whose directivity is directed to user terminal 200d, data signal s to user terminal 200d existing at a position not covered by aforementioned single beam #1. Transmission control section 105 transmits data signal $s_3$ to user terminal 200c whose transmission request is different by beam #2 whose directivity is directed to user terminal 200c.

As understood, base station 100 (transmission control section 105) selects, of a plurality of user terminals 200 whose transmission requests are the same, two or more user terminals 200 to be covered together by a single beam based on the positional information on user terminals 200 in beam transmission method 3 for the identical data signals.

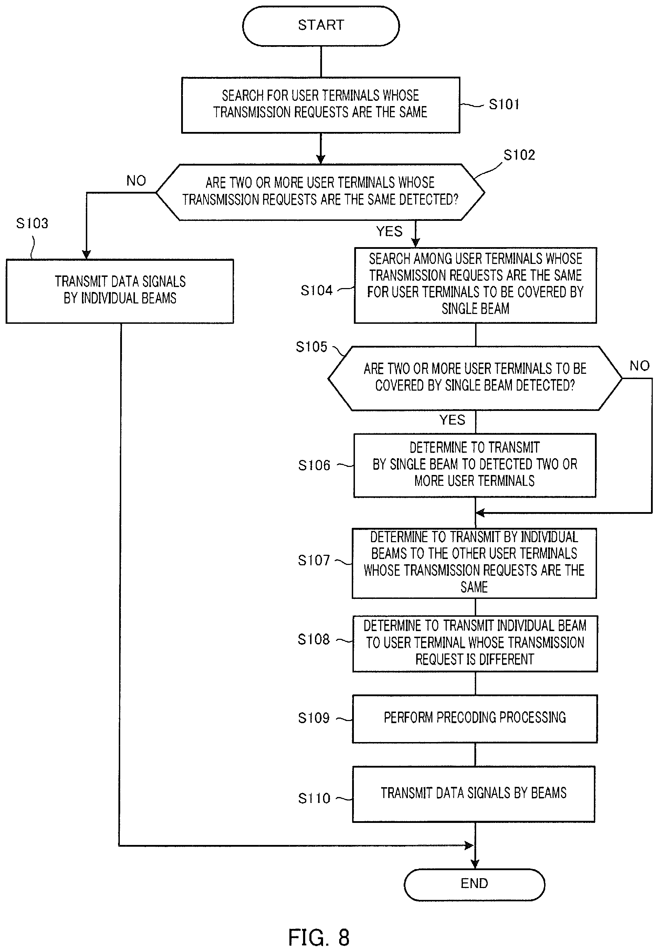

Next, an example of processing of base station 100 (transmission control section 105) in beam transmission method 3 for the identical data signals will be described with reference to the flowchart in FIG. 8.

Transmission control section 105 searches for user terminals 200 whose transmission requests are the same from the information on control channels or data channels (uplink signals) transmitted from user terminals 200 (S101).

When transmission control section 105 does not detect user terminals 200 whose transmission requests are the same by the search at S101 or when the number of detected user terminals 200 whose transmission requests are the same is less than two (S102: NO), individual beams are transmitted as illustrated in the example of FIG. 4 (S103) and the present processing is ended (END).

When transmission control section 105 detects two or more user terminals 200 whose transmission requests are the same by the search at S101 (S102: YES), transmission control section 105 searches for two or more user terminals 200 existing at positions covered together by a single beam among a plurality of detected user terminals 200 (S104).

Transmission control section 105 performs processing of S107 when transmission control section 105 does not detect two or more user terminals 200 by the search at S104 (S105: NO).

When transmission control section 105 detects two or more user terminals 200 by the search at S104 (S105: YES), transmission control section 105 determines to transmit identical-content data signals to these two or more user terminals 200 by a single beam (S106) and performs processing of S107.

Transmission control section 105 determines to transmit identical-content data signals by individual beams to user terminals 200 which are not covered together by the single beam at S106 and whose transmission requests are the same (S107).

Transmission control section 105 determines to transmit, by an individual beam, a data signal to user terminal 200 whose transmission request is different (S108).

Transmission control section 105 performs beamforming or precoding for transmitting the beams determined at S106, S107, and S108 (S109). Transmission control section 105 then controls radio transmission section 106 for transmitting the data signals by the beams (S110) and ends the present processing (END).

<Modification>

Note that, although the beams are orthogonalized in the above descriptions, not all of the beams necessarily need to be orthogonalized in the present embodiment. For example, when two beams are spatially multiplexed and signal separation is available for the two beams in the present embodiment, these two beams do not have to be orthogonalized.

Additionally or alternatively, when user terminals 200 whose transmission requests are the same are detected, base station 100 (transmission control section 105) may stand by for a predetermined period or stand by until a predetermined time instead of immediately transmitting identical-content data signals, and, in a case where base station 100 further detects user terminals 200 whose transmission requests are the same during the stand-by period, those user terminals 200 may also be included as the targets for transmission of the identical-content data signals. Thus, the opportunities to transmit the broadcast beam increase, so that the data transmission efficiency improves.

<Summary of Embodiment>

In the present embodiment, when base station 100 detects reception of a plurality of transmission requests for identical-content data signals from a plurality of user terminals 200, base station 100 applies, to the data signals to be transmitted to a plurality of user terminals 200, beamforming for covering a plurality of user terminals 200 by at least one transmission beam, and transmits, by the transmission beam, the data signals to which the beamforming has been applied.

This improves the data transmission efficiency in the case of transmitting the identical-content data signals to a plurality of user terminals 200.

The present embodiment has been described above.

(Hardware Configuration)

Note that the block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

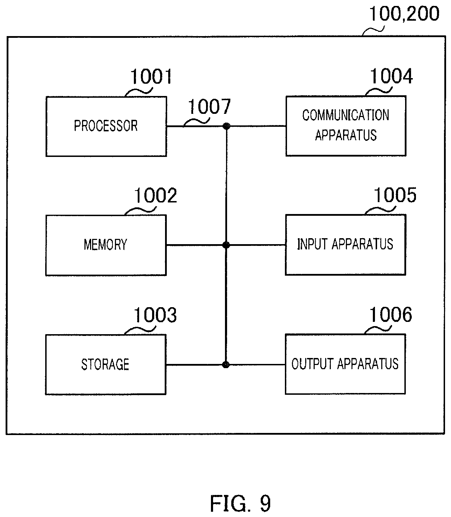

For example, base station 100, user terminal 200, and the like according to an embodiment of the present disclosure may function as a computer that executes processing of a radio communication method of the present disclosure. FIG. 9 illustrates an example of a hardware configuration of base station 100 and user terminal 200 according to an embodiment of the present disclosure. Base station 100 and user terminal 200 described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of the base station and of the user terminal may include one or more of the apparatuses illustrated in the drawings or may not include a part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in the base station and user terminal are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, coding section 101, modulation section 102, estimation section 103, selection section 104, transmission control section 105, demodulation section 204, decoding section 205, and the like described above may be implemented by processor 1001. In addition, a necessary table may be stored in memory 1002.

Processor 1001 reads out a program (program code), a software module, or data from storage 1003 and/or communication apparatus 1004 to memory 1002 and executes various types of processing according to the read-out program or the like. The program used is a program for causing the computer to execute at least part of the operation described in the embodiments. For example, at least part of the functional blocks constituting base station 100 and user terminal 200 may be implemented by a control program stored in memory 1002 and operated by processor 1001, and the other functional blocks may also be implemented in the same way. While it has been described that the various types of processing as described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module. For example, radio transmission sections 106 and 201, antennas 107 and 202, radio reception sections 108 and 203, and the like described above may be implemented by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

In addition, base station 100 and user terminal 200 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

(Notification and Signaling of Information)

The notification of information is not limited to the aspects or embodiments described in the present specification, and the information may be notified by another method. For example, the notification of information may be carried out by one or a combination of physical layer signaling (for example, Downlink Control Information (DCI) and Uplink Control Information (UCI)), higher layer signaling (for example, Radio Resource Control (RRC) signaling, Medium Access Control (MAC) signaling, broadcast information (Master Information Block (MIB) and System Information Block (SIB)), and other signals. The RRC signaling may be called an RRC message and may be, for example, an RRC connection setup message, an RRC connection reconfiguration message, or the like.

(Adaptive System)

The aspects and embodiments described in the present specification may be applied to a system using Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), or other appropriate systems and/or to a next-generation system extended based on the above systems.

(Processing Procedure and the like)

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

(Operation of Base Station)

Specific operations which are described in the specification as being performed by the base station (radio base station) may sometimes be performed by an upper node depending on the situation. Various operations performed for communication with a terminal in a network constituted by one network node or a plurality of network nodes including a base station can be obviously performed by the base station and/or a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

(Direction of Input and Output)

The information, the signals, and the like can be output from a higher layer (or a lower layer) to a lower layer (or a higher layer). The information or the like may be input and output through a plurality of network nodes.

(Handling of Input and Output Information and the like)

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

(Determination Method)

The determination may be made based on a value expressed by one bit (0 or 1), based on a Boolean value (true or false), or based on comparison with a numerical value (for example, comparison with a predetermined value).

(Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

(Information and Signals)

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

("System" and "Network")

The terms "system" and "network" used in the present specification can be interchangeably used.

(Names of Parameters and Channels)

The information, the parameters, and the like described in the present specification may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, Physical Uplink Control Channel (PUCCH) and Physical Downlink Control Channel (PDCCH)) and information elements (for example, TPC) can be identified by any suitable names, and various names assigned to these various channels and information elements are not limited in any respect.

(Base Station)

The base station (radio base station) can accommodate one cell or a plurality of (for example, three) cells (also called sector). When the base station accommodates a plurality of cells, the entire coverage area of the base station can be divided into a plurality of smaller areas, and each of the smaller areas can provide a communication service based on a base station subsystem (for example, small base station for indoor, remote radio head (RRH)). The term "cell" or "sector" denotes part or all of the coverage area of the base station and/or of the base station subsystem that perform the communication service in the coverage. Furthermore, the terms "base station", "eNB", "cell", and "sector" can be interchangeably used in the present specification. The base station may be called a fixed station, a NodeB, an eNodeB (eNB), an access point, a femto cell, a small cell, or the like.

(Terminal)

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or a User Equipment (UE) or by some other appropriate terms.

(Meaning and Interpretation of Terms)

As used herein, the term "determining" may encompass a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard. The correction RS may be called a Tracking RS TRS), a Phase Compensation RS (PC-RS), a Phase Tracking RS (PTRS), or an additional RS. The demodulation RS and the correction RS may be called by other corresponding names, respectively. The demodulation RS and the correction RS may be specified by the same name (for example, demodulation RS).

The description "based on" used in the present specification does not mean "based only on," unless otherwise specifically stated. In other words, the description "based on" means both of "based only on" and "based at least on."

The "section" in the configuration of each apparatus may be replaced with "means," "circuit," "device," or the like.

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

The radio frame may be constituted by one frame or a plurality of frames in the time domain. The one frame or each of the plurality of frames may be called a subframe, a time unit, or the like in the time domain. The subframe may be further constituted by one slot or a plurality of slots in the time domain. The slot may be further constituted by one symbol or a plurality of symbols (Orthogonal Frequency Division Multiplexing (OFDM)) symbol, Single Carrier-Frequency Division Multiple Access (SC-FDMA) symbol, or the like) in the time domain.

The radio frame, the subframe, the slot, and the symbol indicate time units in transmitting signals. The radio frame, the subframe, the slot, and the symbol may be called by other corresponding names.

For example, in the LTE system, the base station creates a schedule for assigning radio resources to each mobile station (such as frequency bandwidth that can be used by each mobile station and transmission power). The minimum time unit of scheduling may be called a Transmission Time Interval (TTI).

For example, one subframe, a plurality of continuous subframes, or one slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may have a length of one slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (for example, one RE only has to be a minimum unit of resource), and the naming is not limited to RE.

The structure of the radio frame is illustrative only, and the number of subframes included in the radio frame, the number of slots included in the subframe, the numbers of symbols and resource blocks included in the slot, and the number of subcarriers included in the resource block can be changed in various ways.

When articles, such as "a," "an," and "the" in English, are added by translation in the entire disclosure, the articles include plural forms unless otherwise clearly indicated by the context.

(Variations and the like of Aspects)

The aspects and embodiments described in the present specification may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present specification. Modifications and variations of the aspects of the present disclosure can be made without departing from the spirit and the scope of the present disclosure defined by the description of the appended claims. Therefore, the description of the present specification is intended for exemplary description and does not limit the present disclosure in any sense.

The present patent application claims the benefit of priority based on Japanese Patent Application No. 2018-056849 filed on March 23, 2018, and the entire content of Japanese Patent Application No. 2018-056849 is hereby incorporated by reference.

Industrial Applicability

One aspect of the present disclosure is useful for a mobile communication system.

Reference Signs List

| | |
|---|---|
| 100 | Base station |
| 101 | Coding section |
| 102 | Modulation section |
| 103 | Estimation section |
| 104 | Selection section |
| 105 | Transmission control section |
| 106 | Radio transmission section |
| 107 | Antenna |
| 108 | Radio reception section |
| 200, 200a, 200b, 200c, 200d | User terminal |
| 201 | Radio transmission section |
| 202 | Antenna |
| 203 | Radio reception section |
| 204 | Demodulation section |
| 205 | Decoding section |
| 1001 | Processor |
| 1002 | Memory |
| 1003 | Storage |
| 1004 | Communication apparatus |
| 1005 | Input apparatus |
| 1006 | Output apparatus |
| 1007 | Bus |

**Claims**

**1.** Abase station, comprising:

a reception section that receives a transmission request for a data signal;
a transmission section that transmits the data signal in response to reception of the transmission request using beamforming; and
a control section that, when detecting a plurality of the transmission requests for a plurality of the data signals identical in content from a plurality of user terminals, applies beamforming to the data signals to be transmitted to the plurality of user terminals, the beamforming being for covering the plurality of user terminals by at least one transmission beam.

**2.** The base station according to claim 1, wherein
the control section applies, to the data signals, beamforming for covering the plurality of user terminals together by a single transmission beam.

**3.** The base station according to claim 1, wherein
the control section applies, to the data signals, beamforming for covering the plurality of user terminals individually by a plurality of non-orthogonal transmission beams.

**4.** The base station according to any one of claims 1 to 3, wherein,
when the reception section receives a transmission request for a second data signal different from the data signal that is a first data signal, the control section applies, to the second data signal, beamforming for forming a transmission beam orthogonal to the at least one transmission beam of the first data signal.

**5.** The base station according to claim 1, wherein
the control section selects two or more of the plurality of user terminals to be covered together by a single transmission beam, the two or more user terminals being selected based on positional information on the plurality of user terminals.

**6.** A transmission method by a base station, the transmission method comprising:

applying beamforming to data signals that are identical in content and that are to be transmitted to a plurality of user terminals, when a plurality of transmission requests for the data signals from the plurality of user terminals are detected, the beamforming being for covering the plurality of user terminals by at least one transmission beam; and

transmitting, by the at least one transmission beam, the data signals to which the beamforming has been applied.

FIG. 1

FIG. 2

200

202

201

RADIO TRANSMISSION
SECTION

TRANSMISSION REQUEST

REFERENCE SIGNAL

203

RADIO RECEPTION
SECTION

204

DEMODULATION
SECTION

205

DECODING
SECTION

DATA SIGNAL

FIG. 3

BEAM #1

200a

s₁

100

BEAM #2

200b

s₂

BEAM #3

200c

s₃

s₄

200d

BEAM #4

FIG. 4

FIG. 5A

FIG. 5B

FIG. 6

FIG. 7

START

SEARCH FOR USER TERMINALS WHOSE
TRANSMISSION REQUESTS ARE THE SAME — S101

ARE TWO OR MORE USER TERMINALS WHOSE
TRANSMISSION REQUESTS ARE THE SAME DETECTED? — S102

NO

YES

S103

TRANSMIT DATA SIGNALS
BY INDIVIDUAL BEAMS

SEARCH AMONG USER TERMINALS WHOSE
TRANSMISSION REQUESTS ARE THE SAME
FOR USER TERMINALS TO BE COVERED BY
SINGLE BEAM

S104

S105 — ARE TWO OR MORE USER TERMINALS TO BE
COVERED BY SINGLE BEAM DETECTED?

NO

YES

S106 — DETERMINE TO TRANSMIT
BY SINGLE BEAM TO DETECTED TWO OR
MORE USER TERMINALS

S107 — DETERMINE TO TRANSMIT BY INDIVIDUAL
BEAMS TO THE OTHER USER TERMINALS
WHOSE TRANSMISSION REQUESTS ARE THE
SAME

S108 — DETERMINE TO TRANSMIT INDIVIDUAL BEAM
TO USER TERMINAL WHOSE TRANSMISSION
REQUEST IS DIFFERENT

S109 — PERFORM PRECODING PROCESSING

S110 — TRANSMIT DATA SIGNALS BY BEAMS

END

FIG. 8

100,200

1001

PROCESSOR

1007

1004

COMMUNICATION
APPARATUS

1002

MEMORY

1005

INPUT APPARATUS

1003

STORAGE

1006

OUTPUT APPARATUS

FIG. 9

## INTERNATIONAL SEARCH REPORT

| International application No. |
| --- |
| PCT/JP2019/012212 |

**A. CLASSIFICATION OF SUBJECT MATTER**
Int.Cl. H04B7/06(2006.01)i, H04W4/06(2009.01)i, H04W16/28(2009.01)i

According to International Patent Classification (IPC) or to both national classification and IPC

**B. FIELDS SEARCHED**

Minimum documentation searched (classification system followed by classification symbols)
Int.Cl. H04B7/06, H04W4/06, H04W16/28

Documentation searched other than minimum documentation to the extent that such documents are included in the fields searched
Published examined utility model applications of Japan 1922–1996
Published unexamined utility model applications of Japan 1971–2019
Registered utility model specifications of Japan 1996–2019
Published registered utility model applications of Japan 1994–2019

Electronic data base consulted during the international search (name of data base and, where practicable, search terms used)
IEEE Xplore

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2008-11259 A (KYOCERA CORP.) 17 January 2008, paragraphs [0029]-[0044], fig. 1-2 (Family: none) | 1-2, 5-6<br>3-4 |
| X<br>Y<br>A | JP 2002-164843 A (NTT DOCOMO INC.) 07 June 2002, paragraphs [0004], [0017]-[0047], fig. 2-3, 5-7 (Family: none) | 1-2, 6<br>3-4<br>5 |
| Y | JP 2009-530983 A (BECEEM COMMUNICATIONS, INC.) 27 August 2009, claims 19-20 & US 2007/0217369 A1, claims 18-19 & US 2007/0218954 A1 & WO 2007/109296 A2 | 3-4 |
| Y | JP 2007-96744 A (TOSHIBA CORP.) 12 April 2007, paragraph [0067] & US 2007/0070927 A1, paragraph [0120] | 3-4 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 May 2019 (23.05.2019) | Date of mailing of the international search report<br>04 June 2019 (04.06.2019) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018056849 A

**Non-patent literature cited in the description**

- Evolved Universal Terrestrial Radio Access (E-UTRA) and Evolved Universal Terrestrial Radio Access Network(E-UTRAN); Overall description; Stage 2 (Release 8). *3GPP TS 36.300 V8.12.0,* April 2010